# EUROPEAN PATENT APPLICATION

(11) **EP 4 044 093 A1**
(43) Date of publication of application: **17.08.2022**
(21) Application number: 21157365.4
(22) Date of filing: 16.02.2021
(51) Int. Cl.: G06Q 30/02, G01C 21/12

(54) **COLLECTING FEEDBACK**

(71) Applicant: HiAll Oy, 33580 Tampere (FI)
(72) Inventor: Nurmi, Mikko, 33580 Tampere (FI)
(74) Representative: Kolster Oy Ab

(57) **Abstract**

An apparatus for monitoring a plurality of paths, receiving information relating to predetermined characteristics separating the plurality of paths, receiving information relating to predetermined categories defined by the characteristics separating the plurality of paths, receiving information relating to an object passing through one of the plurality of paths, determining, based on the information relating to predetermined characteristics separating the plurality of paths, the information relating to predetermined categories defined by the characteristics separating the plurality of paths and the information relating to an object passing through one path of the plurality of paths, the category of the path the object passed through, and obtaining, based on the category of the path the object passed through, feedback provided by the object.

## Description

### TECHNICAL FIELD

The present application relates generally to sharing information. More specifically, the present application relates to sharing information and collecting feedback contactless.

### BACKGROUND

Sharing information between consumers and service providers is getting more and more important as the expectations for the quality of service and products are continuously growing.

Feedback contributes to developing products and services. Also, customers often want to express their opinions about service or products they received. For the accuracy, feedback queries are often implemented closely after the service it concerns.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided a method comprising: monitoring a plurality of paths; receiving information relating to predetermined characteristics separating the plurality of paths; receiving information relating to predetermined categories defined by the characteristics separating the plurality of paths; receiving information relating to an object passing through one of the plurality of paths; determining, based on the information relating to predetermined characteristics separating the plurality of paths, the information relating to predetermined categories defined by the characteristics separating the plurality of paths and the information relating to an object passing through one path of the plurality of paths, the category of the path the object passed through; and obtaining, based on the category of the path the object passed through, feedback provided by the object.

According to a second aspect of the invention, there is provided a computer program comprising instructions for causing an apparatus to perform at least the following: monitoring a plurality of paths; receiving information relating to predetermined characteristics separating the plurality of paths; receiving information relating to predetermined categories defined by the characteristics separating the plurality of paths; receiving information relating to an object passing through one of the plurality of paths; determining, based on the information relating to predetermined characteristics separating the plurality of paths, the information relating to predetermined categories defined by the characteristics separating the plurality of paths and the information relating to an object passing through one path of the plurality of paths, the category of the path the object passed through; and obtaining, based on the category of the path the object passed through, feedback provided by the object.

According to a third aspect of the invention, there is provided an apparatuslOO comprising at least one processor 110 and at least one memory 160 including computer program code 120, the at least one memory 160 and the computer program code 120 configured to with the at least one processor 110, cause the apparatus 100 at least to: monitor a plurality of paths, receive information relating to predetermined characteristics separating the plurality of paths, receive information relating to predetermined categories defined by the characteristics separating the plurality of paths, receive information relating to an object passing through one of the plurality of paths, determine, based on the information relating to predetermined characteristics separating the plurality of paths, the information relating to predetermined categories defined by the characteristics separating the plurality of paths and the information relating to an object passing through one path of the plurality of paths, the category of the path the object passed through and obtain, based on the category of the path the object passed through, feedback provided by the object.

According to a fourth aspect of the invention, there is provided a non-transitory computer readable medium comprising program instructions for causing an apparatus 100 to perform at least the following: monitoring a plurality of paths; receiving information relating to predetermined characteristics separating the plurality of paths; receiving information relating to predetermined categories defined by the characteristics separating the plurality of paths; receiving information relating to an object passing through one of the plurality of paths; determining, based on the information relating to predetermined characteristics separating the plurality of paths, the information relating to predetermined categories defined by the characteristics separating the plurality of paths and the information relating to an object passing through one path of the plurality of paths, the category of the path the object passed through; and obtaining, based on the category of the path the object passed through, feedback provided by the object.

In an example embodiment, there is an apparatus 100 comprising at least one processor 110 and at least one memory 160 including computer program code 120, the at least one memory 160 and the computer program code 120 configured to with the at least one processor 110, cause the apparatus 100 at least to: monitor a plurality of paths, receive information relating to predetermined characteristics separating the plurality of paths, receive information relating to predetermined categories defined by the characteristics separating the plurality of paths, receive information relating to an object passing through one of the plurality of paths, determine, based on the information relating to predetermined characteristics separating the plurality of paths, the information relating to predetermined categories defined by the characteristics separating the plurality of paths and the information relating to an object passing through one path of the plurality of paths, the category of the path the object passed through and obtain, based on the category of the path the object passed through, feedback provided by the object.

In an example embodiment, the apparatus is caused to monitor the plurality of paths. In an example, the apparatus is further caused to receive information relating to an object passing through one of the plurality of paths.

In an example embodiment, the at least one object passing through one of the plurality of paths comprises a human walking. In another example, the at least one object passing through one of the plurality of paths comprises a car. In another example, the at least one object passing through one of the plurality of paths comprises a bicycle. In another example, the at least one object passing through one of the plurality of paths comprises a motorcycle. In another example, the at least one object passing through one of the plurality of paths comprises a manned or unmanned flying vehicle. In another example, the at least one object passing through one of the plurality of paths comprises a smart device carried by a human being.

In an example embodiment, the at least one memory and the computer program code are configured with the at least one processor, cause the apparatus to receive the information relating to an object passing through one of the plurality of paths from at least one sensor. The sensor may comprise alternative types of sensors for detecting the location of an object. Choice of sensor type to be used can be made based on use of apparatus 100 and determined other information to be collected. For example, if sensor comprises a camera, from the same picture or video, there may be collected information relating to location of an object, and additional information may be collected relating to age or gender of the object. In an example embodiment, where an object comprises a car, the number of people in the car may be obtained from picture and/ or video. Also, using multiple sensors and/or sensors of different types for monitoring the plurality of paths at the same time can be beneficial. For example, using multiple cameras and/or motion detectors at the same time.

In an example embodiment, the at least one sensor comprises a camera. For example, camera may provide information in form of a picture or video. Visual information gathered in from of a picture or a video may be utilized for collecting other information as well. Other information may comprise, for example, information about age or gender of an object, or information of the vehicle of an object.

In an example embodiment, the at least one sensor comprises a motion detector. The detector may also comprise an infrared or other sensor for detecting movement.

In an example embodiment the at least one sensor comprises a pressure detector. The motion detector may comprise a sensor on the ground or in the structures to detect an object passing through. For example, a sensor may detect the pressure caused by the vehicle driving over it or a human walking over it.

In an example embodiment, the at least one sensor comprises a thermographic camera.

In an example embodiment, the at least one sensor comprises sensor caused to detect smart devices carried by human beings. For example, a sensor may comprise a Bluetooth or other technology for detecting a smart phone, tablet, computer, or a smart watch carried through one of the plurality of paths.

In an example embodiment, the information relating to an object passing through one of the plurality of paths comprises information relating to a direction of motion of the object. In cases, where the apparatus is utilized for both entering / exiting a shop, the objects may be separated by the information and thus feedback provided by them is separated and stored correctly. For detecting the direction of motion there may be a sensor prior to the plurality of paths, or the direction of motion may be detected from data comprising a picture or a video of an object passing through one of the plurality of paths.

In an example embodiment, the plurality of paths comprises plurality of alternative separated paths. For example, there may be provided a plurality of doors for entering/exiting. In another example, there may be provided a plurality of driving lines for entering/exiting by car or by motorcycle or by bicycle.

In an example embodiment, the plurality of paths comprises a path configured to a plurality of sections. For example, a broad entrance/exit door may be configured to a plurality of sections. Similarly, entrance/exit for cars may be a broad lane configured to a plurality of sections.

In an example embodiment, the plurality of paths comprises exit / entrance of premises. For example, the plurality of paths may comprise doors for entering / exiting a shop. In another example, the plurality of paths may comprise driving lines for entering / exiting drive-in service, for example, a drive-in restaurant. Locating the apparatus 100 and thus query, timely close to the service it concerns, increases the accuracy of the feedback collected.

In an example embodiment, the plurality of paths comprises indication of predetermined path categories relating to alternative paths or path-areas. For example, the plurality of paths is marked to indicate predetermined path categories relating to alternative paths or path sections. Path categories may, for example, illustrate alternative answers to previously presented question. For example, alternative options for level of satisfaction with received service may be illustrated. Illustration may comprise text, pictures, numbers, video information, audio, projected visual data, signs, or other illustrations.

In an example embodiment, the apparatus is caused to transmit information to at least one communication devise located prior to the path. In an example embodiment, there may be a display caused to present a question regarding the level of satisfaction relating to received service.

In an example embodiment, the apparatus is caused to transmit information to at least one communication device located following the path. For example, there may be a voice repeating the category of the path the object passed through and welcoming the customer to come again.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 illustrates an example method according to an example embodiment of the invention;
Figure 3 illustrates another example method according to an example embodiment of the invention;
Figure 4 illustrates an example process according to an example embodiment of the invention;
Figure 5 illustrates an example system including an example apparatus;
Figure 6 illustrates another example system including an example apparatus.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Due to growing conciseness concerning hygiene, avoiding touching things in public is getting more and more attention. This may lead to customers avoiding pressing buttons of feedback stations, for example. Further, this may lead to inaccuracy of gathered feedback.

Utilizing moving, which is done anyway, for example coming into a shop, or leaving it, as a means for communication saves time and effort as no additional actions are needed. Also, it frees customers from touching anything.

Example embodiments relate to sharing information by moving. More specifically, presenting questions and providing answers, an apparatus and a system for this. For example, apparatus may be utilized for providing and collecting feedback.

The embodiments are not, however, restricted to the apparatus or system given as an example but a person skilled in the art may apply the solution to other systems provided with necessary properties.

According to an example embodiment, an apparatus is caused to monitor a plurality of paths, receive information relating to predetermined characteristics separating the plurality of paths, receive information relating to predetermined categories defined by the characteristics separating the plurality of paths, receive information relating to an object passing through one of the plurality of paths, determine, based on the information relating to predetermined characteristics separating the plurality of paths, the information relating to predetermined categories defined by the characteristics separating the plurality of paths and the information relating to an object passing through one path of the plurality of paths, the category of the path the object passed through and obtain, based on the category of the path the object passed through, feedback provided by the object. In an example embodiment, the object may comprise for example a human, a car, a motorcycle, a flying vehicle, any manned or unmanned electric vehicle or a smart device carried by a human being.

The plurality of paths may comprise any route for entering or exiting premises. Premises may comprise any indoor or outdoor physical environment defined for specific use. For example, a building, a room, a railway station, an airport, a baseball arena, a restaurant, a hairdresser salon, a drive-in restaurant, a grocery store.

For example, the plurality of paths may comprise a door for exiting or entering building or a room, or a driveway for exiting or entering premises or outdoor spaces. A plurality of paths may also comprise a gate or other structure built for the use. A plurality of paths may also comprise any indoor or outdoor space which is defined as path. For example, a defined spot at a marked square.

In an example embodiment, the plurality of paths may comprise at least two doors. In another example embodiment, the plurality of alternative paths may comprise at least two driving lanes separated from each other in a manner that it is possible to use only one at a time.

In another example embodiment, the plurality of paths may comprise a broad door or drive lane. The door or drive line may be configured to be divided to at least two parallel sections and feedback may be provided by passing through via chosen section.

In an example embodiment, the path may be adjusted for vehicles. For example, the system may be utilized in drive-in service, where the plurality of paths comprises a plurality of driveways or a broad driveway divided to sections and the object detected by the sensor comprise a car. In an example, an apparatus is caused to receive information relating to predetermined characteristics separating the plurality of paths.

Predetermined characteristics of the plurality of paths may comprise any definition of location or borderlines of the path or the plurality of the paths. In an example, by receiving information relating to predetermined characteristics of plurality of paths an apparatus may separate alternative paths from each other. Characteristics of the plurality of paths may be defined case-by case depending on the use of the apparatus. After definition, path characteristics remain stable until defined again.

Characteristic of a path comprises determined definition of location or borderlines of the path. Definition may comprise information about configuration of a path. In an example embodiment where a path comprises a broad path divided to sections in lateral direction, characteristic of the path comprises configuration of borderlines of sections, in other words, the width of the sections. It is to be understood, that characteristics of the plurality of path and path characteristics are just alternative expressions for referring to defining location and borderlines of a path or a plurality of paths.

In another example, definition of borderlines of a path comprises configuring the beginning of a path and the ending of a path, in other words, the length of the path. In an example embodiment, where a path comprises a door, the length of the path may be understood to be the same as the width of the wall the door penetrates. In an example embodiment, where a path comprises a driving line, the length of the path may be configured to comprise the part of the driving line, where changing to other driving line is not possible without reverse driving.

In another example, definition of borderlines of a path comprises configuring the height of the path from the ground or the floor. In another example, definition of borderlines of a path comprises configuring the height of the path from another location in the air. For example, with a plurality of paths configured for flying objects, the path characteristics may include three-dimensional definition of location of the plurality of paths.

Path categories may comprise any signs or illustrations for separating alternative paths from each other. For example, path categories may represent alternative answers to question presented via communication device prior to the plurality of paths. Being prior to the plurality of paths may comprise, for example, an occasion or location that is arranged before reaching the plurality of paths, when proceeding the plurality of paths. For example, on a drive line there may be a communication device arranged in the beginning of the drive line, then after short drive, a plurality of paths.

For example, illustration of path categories may comprise words, visual effects, or audio effects. Categories may comprise for example words "yes" and "no". In another example, categories may comprise pictures of thumbs up and thumbs down. In another example, categories may comprise smiley faces with happy, neutral, and sad face. Path categories and/ or illustration of path categories may be defined case-by-case depending on the use of the apparatus.

In an example embodiment, the apparatus may be caused to monitor the plurality of paths by receiving information from at least one sensor. The type of sensor may be chosen case by case. The sensor may comprise for example a camera, a motion detector or pressure detector or any combination of these. In an example embodiment, the apparatus is caused to simultaneously monitor each path of a plurality of paths and each object passing through any path of the plurality of paths.

In an example embodiment, the apparatus may be caused to monitor a plurality of paths continuously for determined time. Monitoring continuously may comprise starting to monitor, then after determined time, quitting to monitor. For example, monitoring may be started when a shop opens, and ended when it closes.

In an example embodiment, there is provided a sensor to detect movement of a customer prior to the customer choosing a path. For example, there may be provided a sensor to detect movements of a customer immediately after the question is presented. For example, sudden turns, or a stop, may be detected. These movements may be interpreted as a confirmation that the customer noticed the question and made a conscious choice in selecting a path. This information may be used for strengthening the credibility of the collected feedback.

The apparatus may be caused to interpret information received from at least one sensor relating to location of an object on a section as an integer or as a decimal. For example, an integer is interpreted as on which path the object is located. Thus, feedback provided by the object may be interpreted as which of the alternative paths and thus, feedback, is chosen. A decimal is interpreted as on which point of the path the object is located. Thus, feedback may be interpreted with emphasis according to determined point the object is located at.

In an example embodiment, the apparatus 100 may be caused to determine the centre part of an object. Based on the detected location of the centre part of an object, the apparatus 100 may be caused to determine the location of an object on a path as an integer or decimal. Based on the location the apparatus 100 may be caused to obtain feedback provided by the object.

In an example embodiment, based on received information the apparatus may be caused to obtain feedback provided by object. The feedback may comprise any answer, reaction, opinion, request, or other communication.

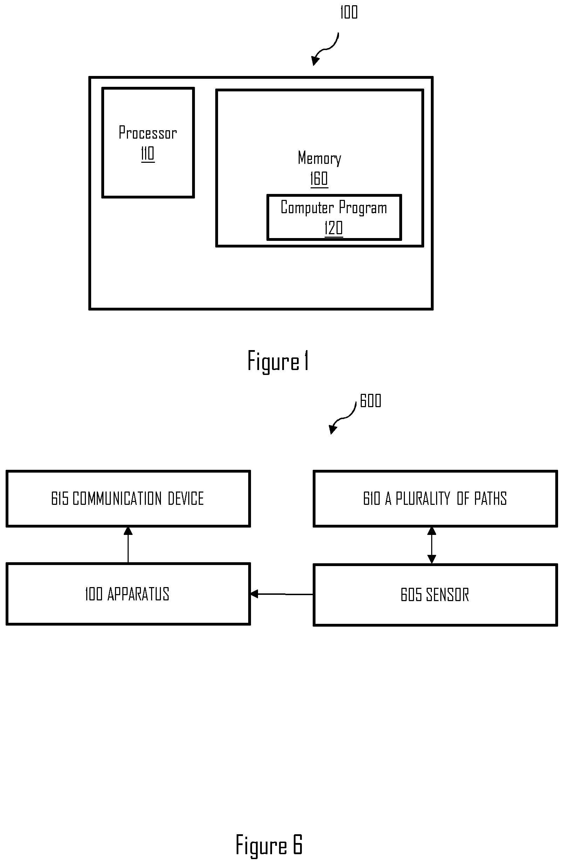

The example of Figure 1 shows an example apparatus 100. The apparatus 100 comprises at least one processor 110 and at least one memory 160 comprising at least one computer program code 120. The apparatus 100 may be, for example, an electronic device such as a chip, chip-set, an electronic device, a network function or an access node such as a base station. The apparatus comprises one or more control circuitry, such as at least one processor 110, and at least one memory 160, including one or more algorithms such as a computer program code 120 wherein the at least one memory 160 and the computer program code 120 are caused, with the at least one processor 110 to cause the apparatus 100 to carry out any of the example functionalities described below.

The memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device, or a record medium such as a Compact Disc (CD), a Compact Disc Read-Only Memory (CD-ROM), a Digital Versatile Disk (DVD) or a Blu-ray disk.

Figure 6 depicts examples of simplified system architectures only showing some elements and functional entities, whose implementation may differ from what is shown. The connections shown in Figure 6 are logical connections; the actual physical connections may be different. It is apparent to a person skilled in the art that the system may also comprise other functions and structures than those shown in Figure 6.

The example of Figure 6 shows an example embodiment of a system 600. In an example embodiment, the apparatus 100 is connected to at least one sensor 605 for monitoring a plurality of paths 610. The apparatus 100 is further connected to at least one communication device 615. The apparatus 100 is further caused to receive information from the at least one sensor 605, the information relating to an object moving along the plurality of paths 610. The apparatus 100 is further caused to transmit determined information to be presented on the at least one communication device 615. The system may comprise also other members.

In an example embodiment, the apparatus may be 100 utilized for collecting feedback regarding service of a restaurant. The plurality of paths 610 comprises a broad exit door divided to three alternatives of which one is illustrated with a sad face, one with a neutral face and one with a happy face. In an example, a customer exiting via section of the door marked with happy face provides this feedback. In another example embodiment, one of the alternative paths may be marked to be used if one does not want to provide any feedback.

The at least one communication device 615 may comprise any device suitable for sharing information. For example, the communication device may comprise a display, a loudspeaker, a reflector, printed information, or person providing the information. The communication device 615 may be arranged prior to the plurality of paths 610 and be caused to present a question to an object proceeding the plurality of paths. For example, there may be a voice caused to ask a question, or a display caused to present a question. Also, a communication device 615 may be arranged following the plurality of paths. For example, there may be a display presenting an answer of an object together with statistics of answers of objects previously passed through.

In another example, outside a shop there may be a display presenting a question "what are you looking for?". In the example, the alternative entering doors comprise the plurality of paths and are marked with products available on the shop. By walking through a certain door, the customer provides answer to the question asked. Following the plurality of paths there may be another display caused to present the location of the products marked on the door via the customer entered. In another example, inside the shop there may a human or a robot customer service providing help in response to provided answer at the plurality of paths.

The communication device 615 may also comprise a device for sharing information relating to path categories. For example, the communication device 615 may comprise any means for marking or visualizing path categories. For example, categories of alternative paths may comprise in themselves also the question. For example, when exiting an airport, there may be two alternative paths comprising two alternative exit-doors. Above one of the exit-doors may be a text "Taxi, please" and above the other "No taxi, thank you". By exiting via chosen door, a customer may indicate if he / she wishes to be offered a taxi or not. In this example, texts "Taxi, please" and "No taxi, thank you" comprise communication device.

In an example embodiment, the communication device arranged following the plurality of paths may be caused to present information verifying to the object the provided feedback. For example, after a customer has walked through chosen path and thus provided his / her feedback, there may be a screen displaying the feedback provided and thus verifying to customer that feedback provided by him/her was interpreted correctly. This may motivate to provide feedback in future as well. In another example, verifying the provided feedback may be carried out by audio means or other means.

In an example embodiment, the information relating to feedback or other communication provided by customer may be transmitted to customers personal data storage or personal devices such as a smart phone or a smart watch.

In another example embodiment, there may be combined use for the apparatus 100 for customers coming into the shop, and customers exiting the shop. The apparatus 100 may be caused to receive information relating to the direction of motion of the object and thus objects coming in or coming out may be separated from each other as well as the information provided by them.

In another example embodiment, there may be a plurality of apparatuses 100 in a queue. The multiple apparatuses 100 maybe caused to collect information relating to separate questions. In another example, questions may be related to each other so that a second question is determined in response to answer to the first question.

In an example embodiment, the apparatus 100 may be caused to process information received from the sensors, including predetermined parameters, to not to react to determined objects, or to react in a determined manner. For example, human under certain height may be determined to be children and their choice of path not to be interpreted as a feedback and not to be taken into the statistics. For another example, cars of determined food delivery company may not to be considered.

In an example embodiment, the apparatus 100 may be caused to combine determined additional information to feedback provided by the object. The additional information may comprise, for example, information about time or date of providing the feedback, or personnel working at that time or the purchase.

In an example embodiment, the additional information may comprise visually gathered information. The visual information may further be processed by artificial intelligence. For example, the additional data may comprise information acquired from a picture or from video. For example, the additional data may comprise information of age or gender of the object or other features inferential from a picture.

In an example embodiment, the additional information may comprise information gathered from smart devices of objects.

In an example embodiment, information relating to customers purchase may be associated with the customer proceeding the plurality of paths. Question presented to customer via communication device may be associated with the information regarding to the purchase. For example, if the customer visited a shop selling furniture and beverages, and bought only beverages, the question may be related to beverages.

In an example embodiment, the apparatus 100 is caused to provide analysis and other information. For example, the apparatus 100 may be caused to provide statistics or summaries of customers or feedback collected.

In an example embodiment, the apparatus 100 may be caused to transmit information further. In an example embodiment, the apparatus 100 may be caused to transmit information further as a response to received request. For example, another apparatus communicatively connected to apparatus 100 may send request regarding of feedback collected by apparatus 100.

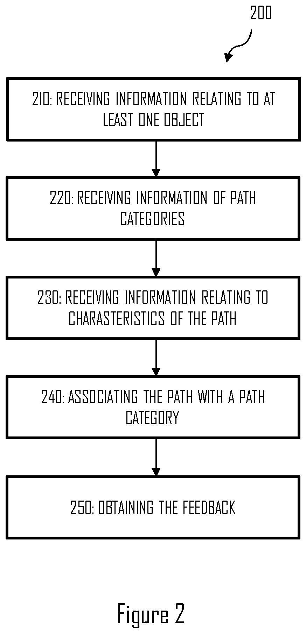

The example of Figure 2 shows an example method of collecting feedback. In the example, the method 200 starts with apparatus 100 receiving 210 information relating to at least one object passing through one of the plurality of paths. The method 200 continues with the apparatus 100 receiving 220 information of path categories. The method 200 further continues with the apparatus receiving 230 information regarding at least one characteristic of the path. The method 200 further continues with the apparatus 100 associating 240 the path with a path category. The method 200 ends with the apparatus 100 obtaining 250 the feedback provided by the object.

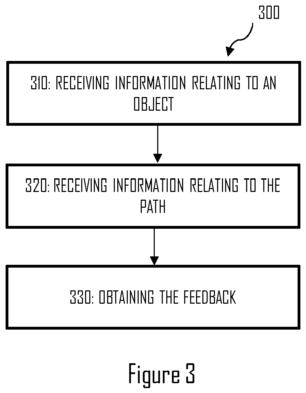

The example of Figure 3 shows another example method of collecting feedback. In the example, the method 300 starts with apparatus 100 receiving 310 information relating to an object. For example, the apparatus 100 may receive information relating to at least one object passing through one of the plurality of paths. The method 300 continues with the apparatus 100 receiving 320 information relating to the plurality of paths. For example, the information may be related to characteristics of a path and predetermined path categories. The method ends with the apparatus 100 obtaining 330, based on the information received, the feedback provided by the object.

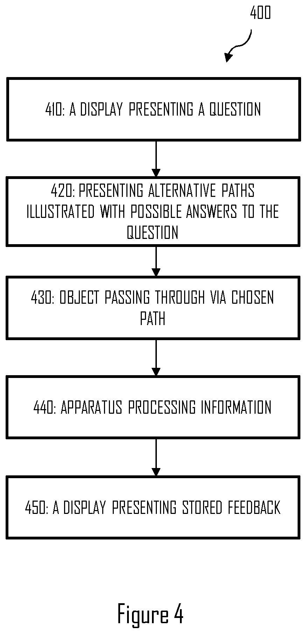

The example of Figure 4 shows an example process of collecting feedback with apparatus 100. In the example the process 400 begins with a customer proceeding the entrance/exit being presented 410 a question on a display. The process 400 further continues with presenting 420 the customer the at least two alternative paths for entrancing /exiting, marked with signs to illustrate alternative answers to the question presented. The process 400 continues with the customer determining answer to the previously presented question, and based on the determined answer, passing through 430 via path illustrating his answer to the question presented. The process 400 further continues with the apparatus 100 processing 440 information by configuration. The process 400 ends with presenting 450 on a display the provided answer to the customer for verifying that correct answer was stored.

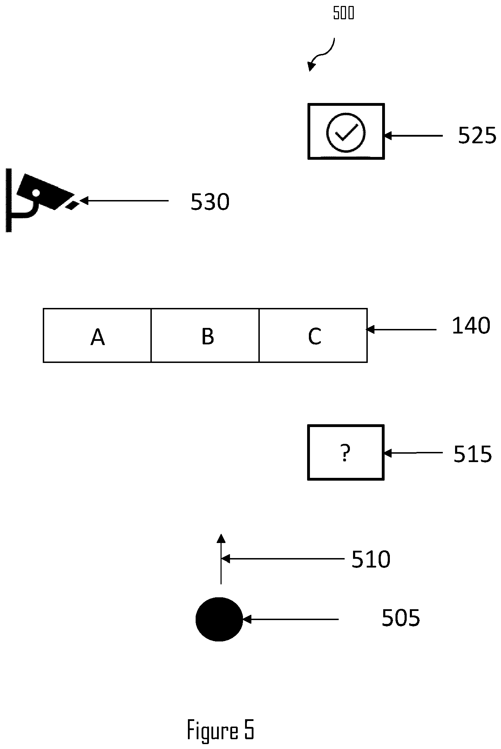

The example of Figure 5 illustrates an example system for collecting feedback with apparatus 100. The example system 500 comprises a first display 515 prior to the plurality of paths 140, the plurality of paths 140 divided into three sections A, B and C, sensor 530 monitoring the plurality of paths 140, and a second display 525 located following the plurality of paths 140. In the example system, the process begins with a customer 505 proceeding in moving direction 510 the plurality of paths 140 comprising exit from the shop. The apparatus 100 is caused to present a question on a first display 515, with alternative answers A, B and C. The customer 505 provides his answer to the question by passing through via the plurality of paths 140 on section marked with A, B or C, respectively illustrating the alternative answers to the question.

In the example, the apparatus 100 caused to monitor the plurality of paths 140 with a sensor 530 and caused to receive information from the sensor 530 relating to the customer 505 passing through one of the plurality of paths 140. The apparatus 100 is further caused to process the received information and to present a determined message on a second display 525, for example verifying the feedback provided by the customer 505.

Without limiting the scope of the claims, an advantage of one or more of the example embodiments disclosed herein is contactless service. Providing feedback by walking or driving via specific path does not involve touching any surfaces so it is safe in terms of health security. A further advantage may be receiving more feedback, as providing feedback is included in exiting premises and no additional tasks are required from customers.

Without in any way limiting the scope, interpretation, or application of the claims appearing below, a technical effect of one or more of the example embodiments disclosed herein is receiving more feedback. Receiving more feedback means getting more accurate insight to customer experiences, which affects the possibility to react correctly to adjust service and offer better service experience to customers. Being able to adjust operation for greater customer satisfaction contributes to competitive advantage and growing revenue.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media or cloud service In the context of this document, a 'computer-readable medium' may be any media or means that can contain, store, communicate, propagate or transport the instructions for use by or in connection with an instruction execution system, apparatus, or device, such as a computer, with one example of a computer described and depicted in Figure 1. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus comprising at least one processor and at least one memory including computer program code, the at least one memory and the computer program code configured to with the at least one processor, cause the apparatus at least to:
monitor a plurality of paths;
receive information relating to predetermined characteristics separating the plurality of paths;
receive information relating to predetermined categories defined by the characteristics separating the plurality of paths;
receive information relating to an object passing through one of the plurality of paths;
determine, based on the information relating to predetermined characteristics separating the plurality of paths, the information relating to predetermined categories defined by the characteristics separating the plurality of paths and the information relating to an object passing through one path of the plurality of paths, the category of the path the object passed through; and
obtain, based on the category of the path the object passed through, feedback provided by the object.

2. The apparatus according to claim 1, wherein, the at least one memory and the computer program code are configured with the at least one processor, cause the apparatus to receive the information relating to an object passing through one of the plurality of paths from at least one sensor.

3. The apparatus according to claim 2, wherein the at least one sensor comprises a camera.

4. The apparatus according to claim 1 or 2, wherein the at least one sensor comprises a motion detector.

5. The apparatus according to claim 1 or 2, wherein the at least one sensor comprises a pressure detector.

6. The apparatus according to any preceding claim, wherein the information relating to an object passing through one of the plurality of paths comprises information relating to a direction of motion of the object.

7. The apparatus according to any preceding claim, wherein the plurality of paths comprises plurality of alternative separated paths.

8. The apparatus according to any preceding claim, wherein the plurality of paths comprises a path configured to a plurality of sections.

9. The apparatus according to any preceding claim, wherein the plurality of paths comprises exit / entrance of premises.

10. The apparatus according to any preceding claim, wherein the plurality of paths comprises indication of predetermined path categories relating to alternative paths or path-areas.

11. The apparatus according to any preceding claim, wherein the apparatus is caused to transmit information to at least one communication devise located prior to the path.

12. The apparatus according to any preceding claim, wherein the apparatus is caused to transmit information to at least one communication device located following the path.

13. A method comprising:
monitoring a plurality of paths;
receiving information relating to predetermined characteristics separating the plurality of paths;
receiving information relating to predetermined categories defined by the characteristics separating the plurality of paths;
receiving information relating to an object passing through one of the plurality of paths;
determining, based on the information relating to predetermined characteristics separating the plurality of paths, the information relating to predetermined categories defined by the characteristics separating the plurality of paths and the information relating to an object passing through one path of the plurality of paths, the category of the path the object passed through; and
obtaining, based on the category of the path the object passed through, feedback provided by the object.

14. A non-transitory computer readable medium comprising program instructions for causing an apparatus to perform at least the following:
monitoring a plurality of paths;
receiving information relating to predetermined characteristics separating the plurality of paths;
receiving information relating to predetermined categories defined by the characteristics separating the plurality of paths;
receiving information relating to an object passing through one of the plurality of paths;
determining, based on the information relating to predetermined characteristics separating the plurality of paths, the information relating to predetermined categories defined by the characteristics separating the plurality of paths and the information relating to an object passing through one path of the plurality of paths, the category of the path the object passed through; and
obtaining, based on the category of the path the object passed through, feedback provided by the object.
